# FASCICULE DE BREVET EUROPEEN

(11) **EP 0 919 449 B1**
(45) Date de publication et mention de la délivrance du brevet: **18.09.2002**
(21) Numéro de dépôt: 98402887.8
(22) Date de dépôt: 20.11.1998
(51) Int. Cl.: B62D 1/28, B62D 1/26, G05D 1/03

(54) **Système de guidage mixte pour véhicule urbain avec limitation mécanique de l'emprise au sol**
Gemischtes Führungssystem für städtisches Fahrzeug mit mechanischer Begrenzung des Fahrbereichs
Mixed guiding system for town vehicle with mechanical limitation of the driving area

(30) Priorité: 26.11.1997 FR 9714832
(43) Date de publication de la demande: 02.06.1999
(73) Titulaire: Renault V.I., 69800 St Priest (FR)
(72) Inventeur: Bao-Loc, Ho, 69003 Lyon (FR); Bechart, Hubert, 69003 Lyon (FR); Ladreyt, Thierry, 38540 Grenay (FR)
(74) Mandataire: Fröhling, Werner, Dr.

(56) Documents cités:
- EP-A- 0 111 258
- FR-A- 2 762 279
- FR-A- 2 766 782
- US-A- 4 003 445
- US-A- 4 223 756
- US-A- 5 485 378

## Description

L'invention concerne les systèmes pour guider les véhicules terrestres, notamment les véhicules de transport en commun, sur tout ou partie d'une voie urbaine sur laquelle circulent d'autres véhicules. Elle concerne plus particulièrement un système pour assister le conducteur d'un véhicule de transport urbain à la manoeuvre de celui-ci sur tout ou partie de son parcours.

Il existe de nombreux systèmes de guidage d'un véhicule terrestre qui peuvent être classés en deux catégories : les systèmes guidés matériels et les systèmes guidés immatériels. Un système de guidage mixte selon la préambule de la revendication 1 est connu du document US 4,223,756. Les systèmes guidés matériels (p. ex. EP 111 258 A2) mettent en oeuvre des bordures latérales ou des rails disposés sur la chaussée, sur lesquels viennent prendre appui des galets de guidage montés sur les essieux directeurs du véhicule. De tels systèmes présentent l'inconvénient d'utiliser des voies de roulement permanentes qui nécessitent une infrastructure lourde et coûteuse, parfois difficile à intégrer dans l'ensemble du réseau de circulation. Par ailleurs, le guidage ne peut être permanent, notamment aux carrefours, de sorte que le chauffeur/machiniste doit reprendre souvent le contrôle du véhicule.

Les systèmes guidés immatériels (p. ex. US 4,003,445) sont basés sur la détection à distance d'une référence de position caractéristique de l'environnement externe du véhicule par l'intermédiaire d'un capteur dédié à cette référence et embarqué sur le véhicule.

Les références de position sont, soit du type passif dans le cas de marquage optique sur la chaussée ou de type actif dans le cas de filoguidage. Le guidage consiste alors à faire suivre au véhicule la trajectoire désirée, soit en indiquant au chauffeur/machiniste les actions à effectuer, soit en agissant directement sur les organes du véhicule.

De tels systèmes guidés immatériels présentent l'avantage par rapport aux précédents d'avoir un coût d'infrastructure plus faible et d'être plus facilement compatibles avec le réseau urbain de circulation car ils n'utilisent pas d'ouvrages apparents qui sont coûteux et entravent la circulation des autres véhicules. Par ailleurs, dans le cas d'un filoguidage, le système est sensible aux perturbations électromagnétiques et la localisation du véhicule n'est pas précise car la portée latérale du capteur est d'environ 15cm.

Dans le cas d'un marquage optique associé à un capteur du type caméra vidéo, la localisation est plus précise qu'avec le filoguidage et n'est pas sensible aux perturbations électromagnétiques mais la détection du marquage peut être perturbée par des phénomènes d'éblouissement et de masquage du marquage.

Le but de la présente invention est donc de réaliser un système de guidage mixte pour véhicule urbain avec limitation mécanique de l'emprise au sol qui associe la souplesse du guidage immatériel à la sécurité du guidage matériel.

A cet effet, le guidage est principalement réalisé par un marquage au sol codé qui est détecté par une caméra vidéo tandis que la sécurité du guidage est obtenue par la coopération de bordures le long de la voie avec des galets solidaires du véhicule qui agissent sur la direction en tant que de besoin.

L'invention concerne donc un système de guidage pour véhicule de transport en commun, caractérisé en ce qu'il comprend :
- un marquage optique codé qui est disposé sur la chaussée pour définir le trajet du véhicule et ses différentes caractéristiques,
- un dispositif embarqué à bord du véhicule pour détecter le marquage optique codé et pour élaborer des signaux de commande du véhicule en direction de manière qu'il suive le trajet défini par le marquage optique codé et respecte les caractéristiques du trajet,
- deux bordures disposées de part et d'autre du marquage optique codé de manière à définir, sur des parties déterminées du trajet, un couloir de passage pour le véhicule dont la largeur correspond l'écart latéral maximal du véhicule par rapport au marquage optique codé, et
- des galets supportés par des bras solidaires du véhicule et coopérant, d'une part, avec les bordures et, d'autre part, avec la direction du véhicule pour donner une indication de la position du véhicule dans le couloir.

Dans un premier exemple de réalisation, les bras de support des galets sont solidaires de la direction et les galets ne viennent en contact avec les bordures que dans le cas d'un écart latéral maximal du véhicule par rapport au trajet du marquage optique codé de manière à modifier l'angle de braquage du véhicule. Dans ce premier exemple de réalisation, la conduite du véhicule est assurée par la combinaison du marquage et du dispositif embarqué, les bordures et les galets n'intervenant que pour la sécurité du véhicule.

Dans un deuxième exemple de réalisation, les galets sont en contact permanent avec les bordures par l'intermédiaire de bras de suspension solidaires de la direction pouvant être équipés de capteurs d'efforts. Dans un troisième exemple de réalisation, les bras du support des galets sont solidaires de la direction du véhicule et les galets ne viennent en contact avec les bordures que dans le cas d'un écart latéral maximal du véhicule par rapport au trajet de marquage pour assurer la sécurité du véhicule ; il est prévu des capteurs de position latérale du véhicule par rapport aux bordures pour fournir des informations de distance par rapport aux bordures, ces informations de distance servant à déterminer la position du véhicule entre les bordures pour valider ou non les signaux de commande du véhicule fournis par le dispositif embarqué.

D'autres caractéristiques et avantages de la présente invention apparaîtront à la lecture de la description suivante d'exemples particuliers de réalisation, ladite description étant faite en relation avec les dessins joints dans lesquels :
- les figures la et 1b sont des schémas montrant un système de guidage d'un véhicule de transport en commun selon l'invention dans le cas d'entrée dans une station et dans le cas d'un passage en courbe;
- la figure 2 est un schéma montrant un véhicule de transport en commun équipé des dispositifs lui permettant de mettre en oeuvre l'invention ;
- la figure 3 est un schéma montrant les interactions entre le véhicule et les deux modes de guidage du véhicule ;
- la figure 4 est un diagramme montrant le fonctionnement du système de guidage dans le cas où les galets ne sont pas en contact permanent avec les bordures;
- la figure 5 est un diagramme montrant le fonctionnement du système de guidage dans le cas où les galets sont en contact permanent avec les bordures;
- la figure 6 est une courbe de variation de l'effort sur le galet en fonction de l'écrasement de l'ensemble galet-bras de suspension ;
- la figure 7 est un diagramme montrant le fonctionnement du système de guidage dans le cas où les galets ne sont pas en contact permanent avec les bordures mais en mettant en oeuvre des capteurs de position latérale du véhicule par rapport aux bordures;
- la figure 8 est un diagramme montrant la procédure d'alignement du véhicule à l'entrée du couloir de passage entre les bordures, et
- la figure 9 est un diagramme montrant la procédure de franchissement d'un passage piéton.
- la figure 10 est un schéma montrant l'architecture des bras supports de galets solidaires de la direction.

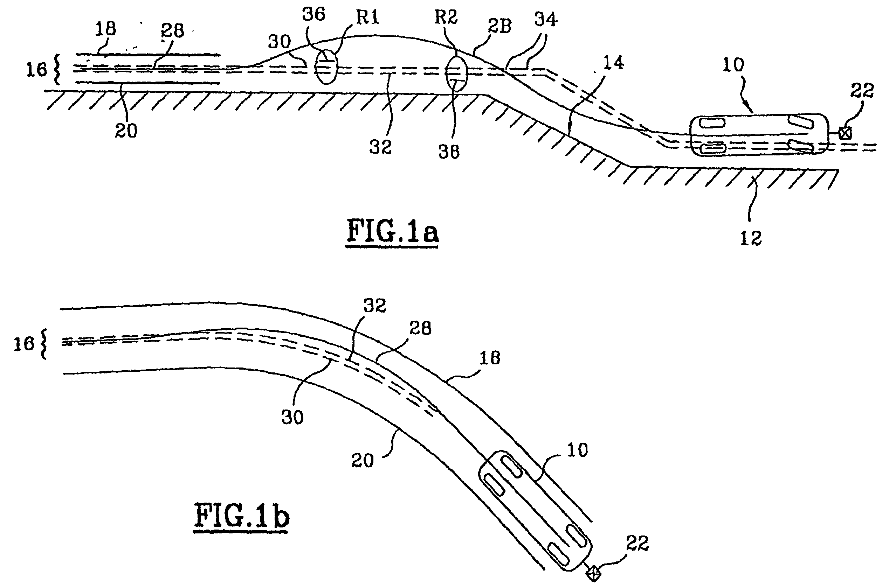

Un système de guidage d'un véhicule de transport en commun 10 sur une chaussée bordée d'un quai ou trottoir 12 comprend sur la chaussée (figure 1) :
- un marquage optique codé 16 qui est disposé sur la chaussée pour définir le trajet du véhicule 10 et ses différentes caractéristiques, et
- deux bordures 18 et 20 disposées de part et d'autre du marquage optique codé 16 de manière à définir, sur des parties déterminées du trajet, un couloir de passage du véhicule 10 dont la largeur correspond sensiblement à l'écart latéral maximal autorisé du véhicule par rapport au marquage optique codé 16.

Le marquage optique codé comprend, par exemple, deux lignes parallèles 30 et 32 de traits interrompus 34, chaque trait ayant, par exemple, une longueur de 75cm séparé du précédent et du suivant par une longueur de 25cm, soit un pas d'un mètre par trait. Le codage peut être réalisé en ajoutant un troisième trait adjacent du côté gauche 36, ou côté droit 38 dans le sens de la circulation du véhicule à deux couples de traits des lignes 30 et 32. Le trait côté gauche 36 correspond à un code ou plot R1 signifiant le début de la phase d'accostage à une station 14 ainsi que le type d'accostage tandis que le trait côté droit 38 . correspond à un code ou plot R2 du type d'accostage.

Le codage des plots peut avoir d'autres significations telles que le passage à un carrefour ou le franchissement d'un passage piéton.

Il est clair que d'autres cryptages de marquage peuvent être mis en oeuvre pour réaliser l'invention et, notamment, n'utiliser qu'une seule ligne de traits ininterrompus ainsi qu'un pas variable qui peut éventuellement être codé.

De tels marquages ont été décrits dans la demande de brevet N° 96 10789 déposée par la demanderesse le 4 septembre 1996 sous le titre : "SYSTEME D'ASSISTANCE A LA CONDUITE D'UN VEHICULE, NOTAMMENT POUR L'ACCOSTAGE A UN QUAI".

Les bordures 18 et 20 sont disposées de part et d'autre du marquage 16 pour définir un couloir de passage ou de roulement du véhicule 10 sur certaines parties du trajet, particulièrement pour celles qui sont rectilignes ou présentent des courbes de grand rayon de courbure.

Dans le cas de la figure 1, ces bordures s'arrêtent dès le début de l'entrée en station de manière à permettre au véhicule d'effectuer le trajet d'accostage selon la ligne 28. Il en serait de même pour un passage piéton ou à un carrefour.

La largeur du couloir est légèrement supérieure à celle du véhicule pour tenir compte de l'écart latéral admissible que peut avoir le véhicule par rapport à un marquage 16.

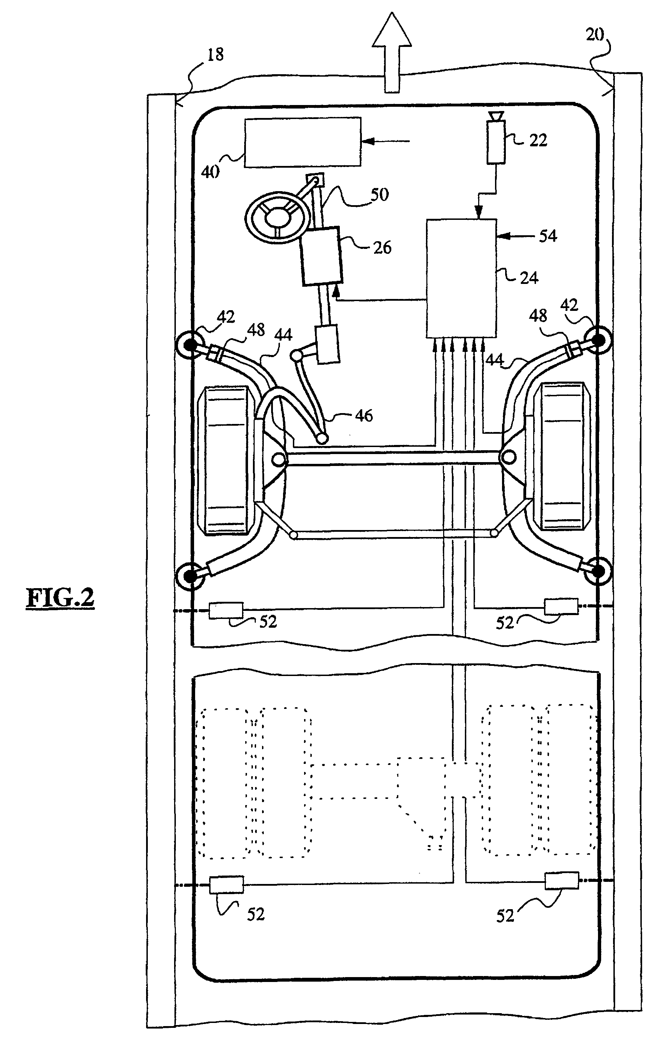

Sur le véhicule 10, le système de guidage comprend (figure 2) :
- un dispositif de détection 22 du marquage codé 16 à bord du véhicule qui fournit des informations de position du véhicule par rapport au marquage ;
- un dispositif de calcul 24 pour calculer, à partir des informations de position et de codage fournies par le dispositif de détection 22, une trajectoire 28 dite de consigne et pour élaborer des signaux de commande d'organes de direction 26, 50 et d'information d'états 40 du système, et
- des galets 42 montés sur des bras 44 qui sont solidaires du mécanisme de direction 46 par l'intermédiaire d'amortisseurs (non représentés) et munis de capteurs 48 indiquant le contact du galet avec la bordure associée par un signal électrique qui est appliqué au dispositif de calcul 24.

Dans un deuxième mode de réalisation, les bras 44 peuvent aussi comporter un capteur 48, mais ce n'est pas indispensable au fonctionnement du système, indiquant le contact du galet avec la bordure associée et le signal électrique correspondant est appliqué au dispositif de calcul 24.

Dans un troisième mode de réalisation, le véhicule comporte, outre les galets sans contact permanent avec les bordures du premier exemple de réalisation, des capteurs 52 de la position latérale du véhicule par rapport aux bordures 18 et 20, par exemple à l'avant et à l'arrière. Ces capteurs fournissent des signaux électriques qui sont appliqués au dispositif de calcul 24 et qui sont représentatifs de la distance des capteurs 52 et donc du véhicule par rapport aux bordures.

La demande de brevet français précitée décrit un exemple particulier de réalisation du dispositif de détection 22, du dispositif de calcul 24, des organes de direction 26 sur la colonne de direction 50 et des organes d'information d'états 40 dans le cas d'un système d'accostage à un quai. Un tel système d'accostage à un quai peut être utilisé pour mettre en oeuvre le système de guidage selon l'invention moyennant quelques adaptations qui sont du domaine de l'homme du métier.

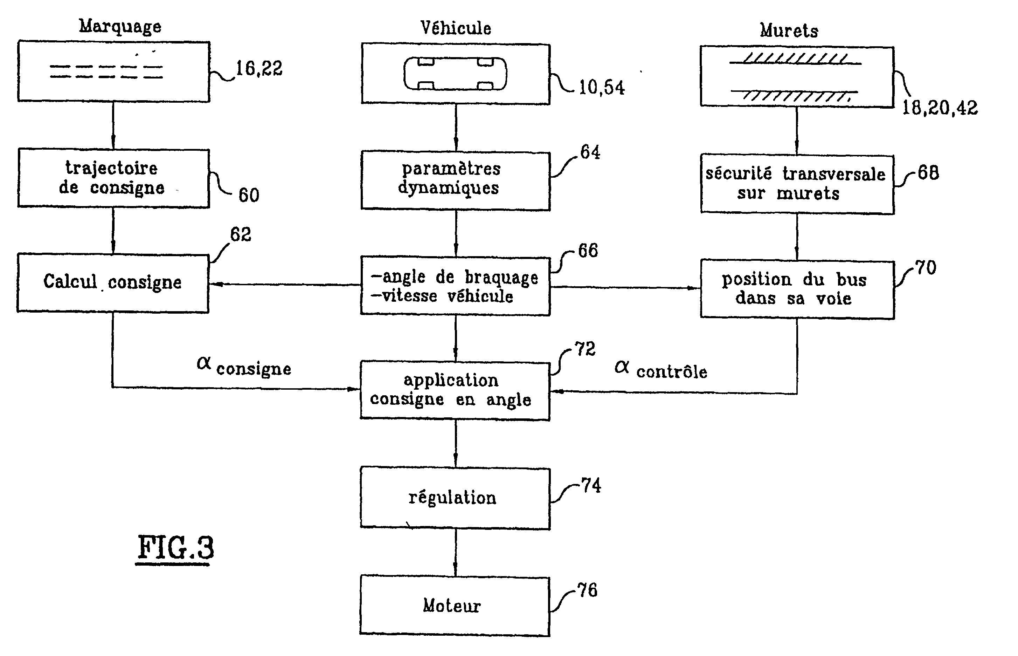

Le diagramme de la figure 3 permet d'expliquer le fonctionnement du système de guidage selon l'invention dans les trois modes de réalisation.

Les informations qui sont nécessaires au guidage du véhicule proviennent du marquage au sol 16, du véhicule 10 par l'entrée 54 et des bordures latérales 18, 20 par les galets 42 et sont traités dans le dispositif de calcul 24 pour assurer le pilotage et la sécurité du véhicule.

Les informations fournies par le marquage 16 via le dispositif de détection et d'analyse 22 sont utilisées pour définir une trajectoire de consigne par l'intermédiaire d'un module d'asservissement 60. Le calcul de l'angle de consigne de braquage Â_{consigne} est réalisé par un module 62.

Les informations fournies par les bordures 18, 20 via les galets 42 et les bras 44 sont utilisées pour assurer la sécurité transversale du véhicule par un module 68.

La position du bus dans la voie peut être calculée par un module 70 de manière à déterminer la tolérance Â_{contrôle} de la valeur de consigne Â_{consigne} à appliquer pour réaliser l'asservissement.

Le véhicule fournit un certain nombre d'informations 64, 66, telles que l'angle de braquage Â et la vitesse V du véhicule, pour permettre le calcul de la consigne à appliquer.

La coordination des actions entre le guidage et la sécurité est assurée par un module 72 qui détermine l'angle de consigne à appliquer au moteur 76 de l'organe de direction 26 par l'intermédiaire d'une boucle de régulation 74.

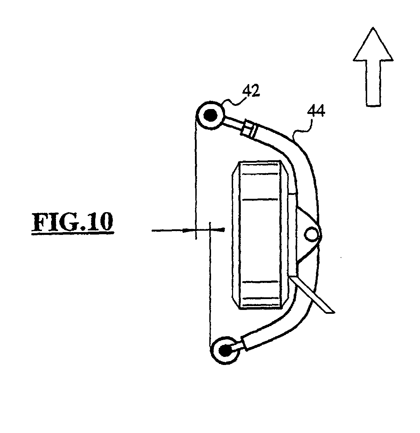

Dans le premier exemple de réalisation, les galets 42 portés par les bras 44 ne sont en contact avec les bordures 18, 20 que dans le cas où le véhicule sort de sa trajectoire. Dans ce cas, les galets prennent appui sur les murets qui, par l'intermédiaire des bras 44 et 46, transmettent l'effort du contact à la direction pour la piloter. Le premier galet à entrer en contact avec la bordure est le galet avant. La fonction du galet arrière et de limiter le braquage induit pr le contact du galet avant lors d'un choc afin de stabiliser le guidage. Le retrait du galet arrière par rapport au galet avant, illustré par la figure 10, permet de "décoller" la direction de la bordure en conduite manuelle, par action sur le volant.

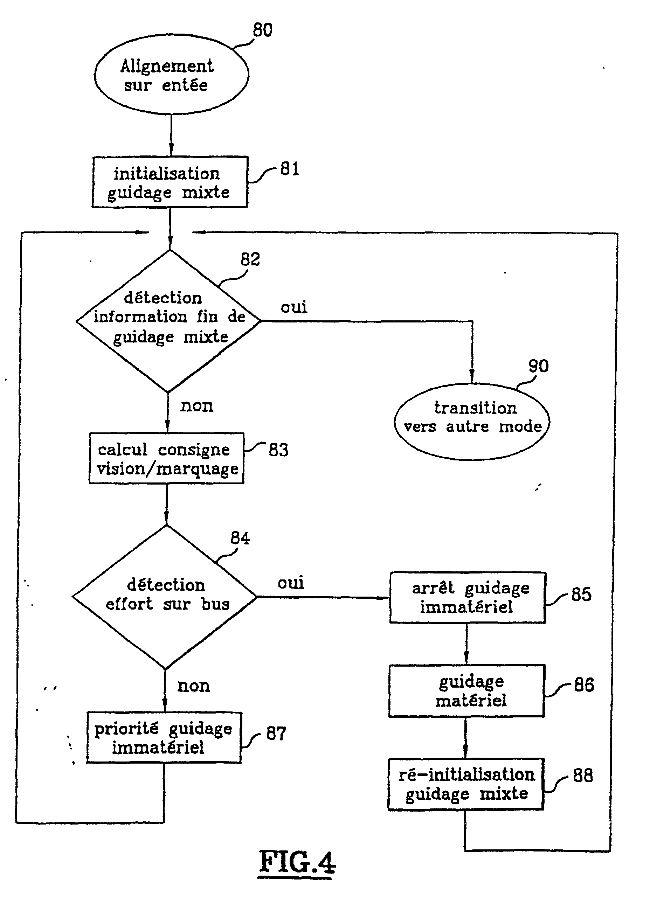

La figure 4 est un diagramme d'explication du fonctionnement de ce premier exemple de réalisation. Dans ce diagramme et les autres, les ovales indiquent les entrées et les sorties du système, les rectangles indiquent les états et/ou événements du système et les losanges indiquent les tests.

Le guidage mixte 81, c'est-à-dire par le marquage et les galets, est initialisé dès que le véhicule est aligné sur l'entrée 80 du couloir, par exemple par la détection d'un code spécifique sur le marquage. Le guidage mixte reste actif tant qu'une information de fin de guidage mixte n'est pas acquise par un test 82 qui résulte de la détection d'un code spécifique définissant la sortie à réaliser, par exemple le code R1 d'accostage à un quai.

En cas de fin de guidage mixte, le système passe dans le mode de sortie 90 défini par le code spécifique du marquage tel que l'accostage à un quai, le franchissement d'un passage piéton ou d'un carrefour.

En l'absence de détection de fin de guidage mixte, ce guidage est maintenu et la consigne de commande de la direction est calculée par l'étape 83. Un test de sécurité sur la position latérale du véhicule dans le couloir est effectué par l'étape 84 en détectant le contact éventuel des galets 42 sur les bordures 18, 20. Si le test est négatif, la priorité est accordée au guidage immatériel par le marquage et la consigne est appliquée par l'étape 87. Si le test est positif, le guidage immatériel est suspendu par l'étape 85 et la priorité est accordée au guidage matériel par l'étape 86 par le biais du bras qui pilote directement la direction du véhicule. Le système reste dans cet état 86 en l'absence d'une instruction de ré-initialisation 88 de guidage mixte, cette instruction pouvant provenir de la détection d'un code spécifique sur le marquage. Les étapes 87 et 88 viennent reboucler sur le test 82 de fin de guidage spécifique.

Dans le deuxième exemple de réalisation, les galets 42 sont en contact permanent avec les bordures 18, 20 et sont portés par les bras 44 qui sont munis d'un dispositif de suspension permettant de limiter les risques de rupture et de donner une souplesse mécanique au système matériel de guidage. La raideur des bras permet ainsi de limiter l'application de consignes de braquage irréalistes.

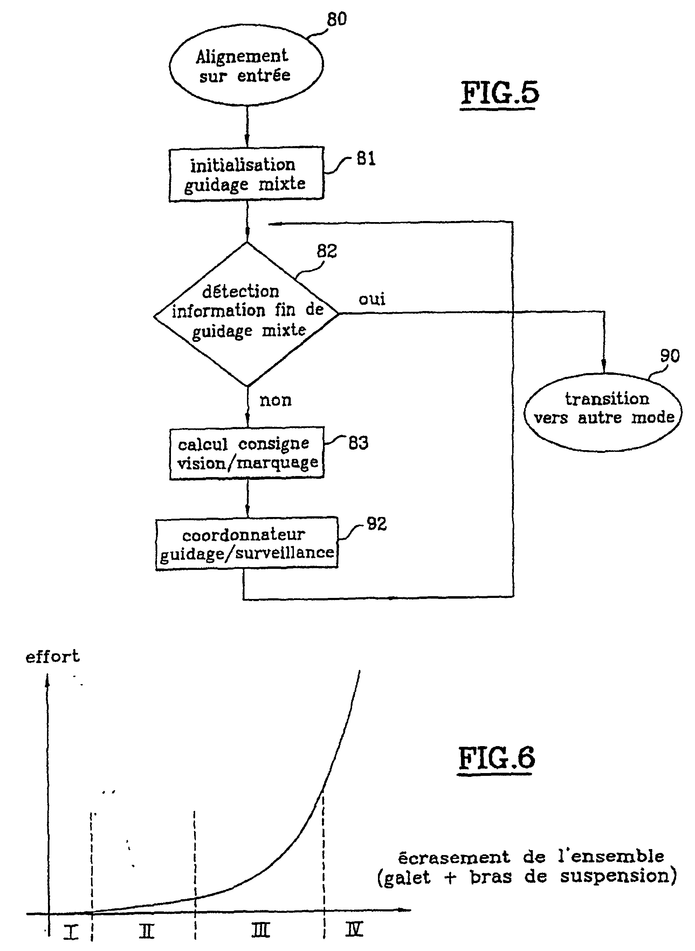

La figure 5 est un diagramme de fonctionnement de ce deuxième exemple de réalisation et seules les étapes qui sont différentes de celles du premier exemple selon la figure 4 seront décrites.

Si la réponse au test 82 de détection de fin de guidage mixte est négative, alors le système passe à l'étape 83 de calcul de la consigne de guidage. L'étape suivante 92 assure la coordination et la supervision entre le guidage matériel et le guidage immatériel.

A l'étape 92, on utilise la courbe de la figure 6, sans valeur d'échelle, qui présente en abscisse l'écrasement de l'ensemble galet-bras de suspension et en ordonnée l'effort sur la suspension. Elle présente quatre zones d'exploitation I à IV qui sont définies de la manière suivante :
- La zone I correspond à la conduite manuelle ou assistée du véhicule en dehors des bordures. Il n'y a pas de contact entre les galets et les bordures.
- La zone II correspond à la phase de guidage entre les bordures où le guidage immatériel est prioritaire. L'appui des galets sur les bordures est qualifié de nominal car l'écrasement des galets-bras de suspension engendre de faibles efforts sur le mécanisme de direction qui ne viennent pas perturber la régulation de la boucle d'asservissement.
- La zone III correspond à la phase de guidage où il y a coopération entre le guidage immatériel et la sécurité matérielle. L'appui des galets sur les bordures est qualifié de critique car l'écrasement des galets-bras de suspension engendre des variations d'efforts qui agissent directement sur le mécanisme de direction et qui viennent s'ajouter aux consignes de régulation de la boucle d'asservissement. Les sorties possibles de cette phase sont les phases II et IV.
- La zone IV correspond à la phase de guidage entre les bordures où le guidage mécanique est prioritaire. L'appui des galets sur les bordures est qualifié de mécanique car l'écrasement des galets-bras de suspension engendre des efforts importants sur le mécanisme de direction qui viennent occulter les consignes de pilotage de la boucle de régulation d'asservissement.

Dans le troisième mode de réalisation, l'équipement du véhicule selon le premier mode de réalisation est complété par quatre capteurs de proximité 52 qui sont disposés latéralement à l'avant et à l'arrière du véhicule et dirigés vers les bordures 18, 20. Ces capteurs permettent de calculer la position géométrique, le centrage et l'orientation du véhicule par rapport aux bordures et donc d'anticiper les courbes et autres situations particulières.

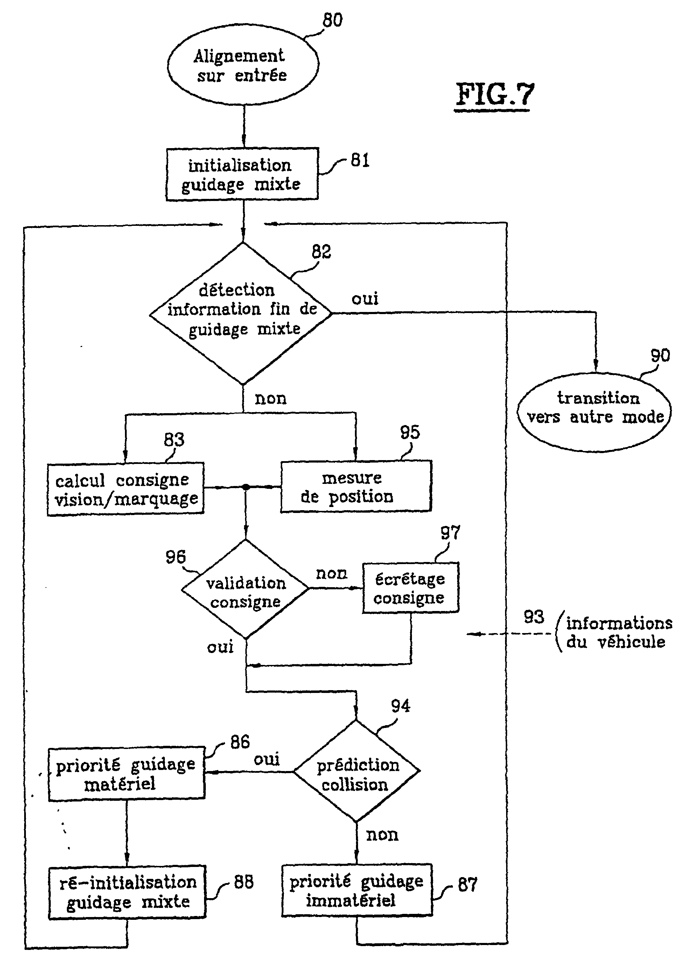

La figure 7 est un diagramme de fonctionnement de ce deuxième exemple de réalisation et seules les étapes qui sont différentes de celles des précédents diagrammes seront décrites. Il ne diffère du diagramme de la figure 5 que par le test de validation de consigne 96 et l'écrêtage de la consigne 97 si la consigne calculée 83 dépasse le domaine de validité défini par la position du véhicule.

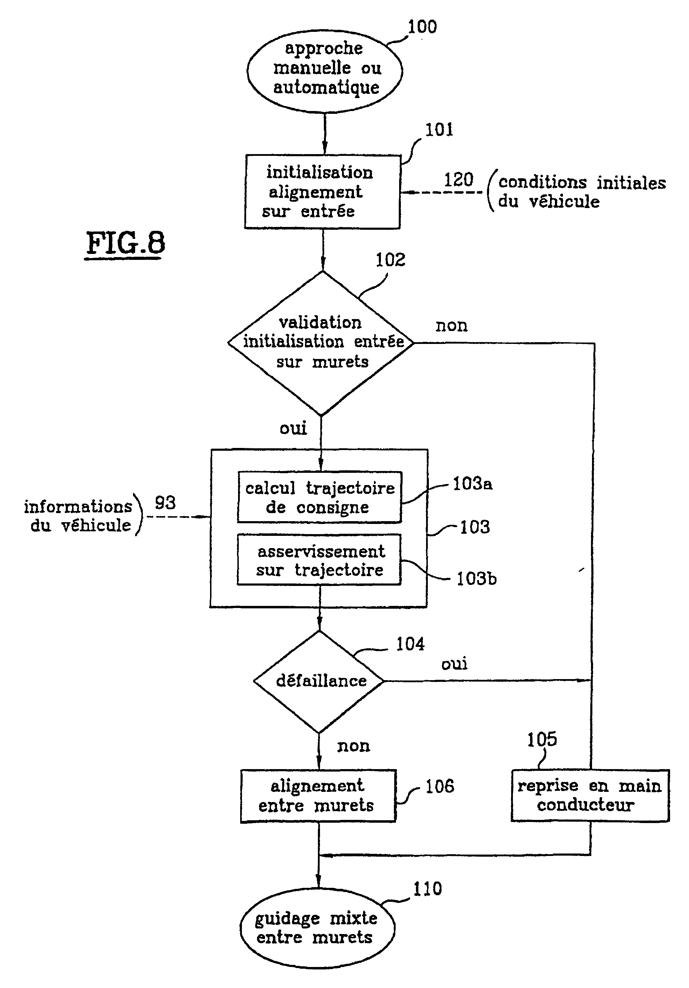

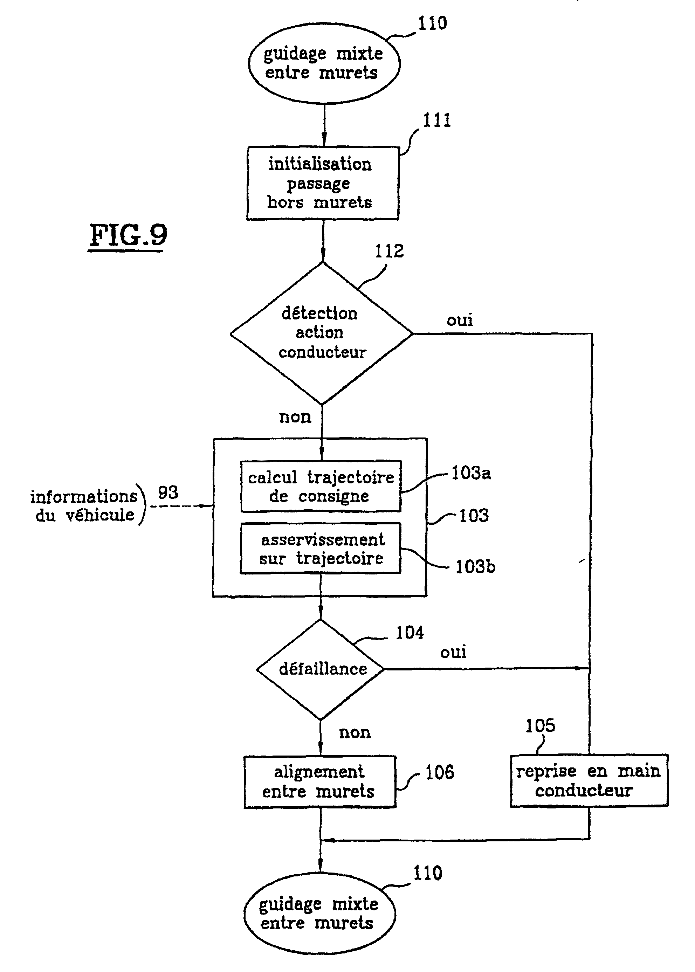

Les figures 8 et 9 sont des diagrammes de fonctionnement du système de guidage selon l'invention dans le cas de la procédure d'alignement du véhicule à l'entrée du couloir de passage (figure 8) et de la procédure de franchissement d'une courte interruption des bordures, par exemple pour un passage piéton (figure 9).

Pour l'entrée dans le couloir, l'étape d'approche (100) peut être faite en manuel ou en automatique au choix du chauffeur/machiniste. A partir des conditions initiales du véhicule 120, l'étape 101 initialise la procédure d'alignement du véhicule entre les bordures. L'étape de test 102 valide ou non l'initialisation de la procédure d'alignement du véhicule entre les bordures. Si le résultat du test est négatif, le système rend la main au chauffeur/machiniste qui réalise lui-même l'alignement. Si le test est positif, l'étape suivante 103 consiste à calculer par l'étape 103a la trajectoire de consigne et à asservir par l'étape 103b cette trajectoire pour réaliser l'entrée automatique du véhicule dans le couloir. Les informations sur la dynamique du véhicule sont nécessaires pour réaliser l'étape 103. Un test de défaillance 104 permet de contrôler le bon déroulement de la procédure d'alignement du véhicule à l'entrée du couloir. Si une défaillance est détectée, le système rend la main au chauffeur/machiniste par l'étape 105. Si le test est négatif, l'étape 106 assure l'alignement, condition nécessaire pour atteindre le guidage mixte 110 du véhicule dans le couloir.

Pour le franchissement d'un tronçon avec interruption du couloir de bordures (figure 9), le véhicule est en guidage mixte 110 et la première étape 111 consiste à initialiser la procédure de franchissement du tronçon. L'étape de test 112 surveille les éventuelles actions du chauffeur/machiniste, tel que l'arrêt du véhicule pour laisser passer un piéton. Si le résultat de ce test est positif, le système rend la main au conducteur par l'étape 105 pour que ce dernier puisse assurer le franchissement de ce passage. Si le résultat est négatif, la procédure est similaire à celle de la procédure d'alignement à l'entrée du couloir.

La description de l'invention qui a été faite ci-dessus permet de définir un procédé de guidage d'un véhicule de transport en commun qui, dans le cas de galets sans contact permanent avec les bordures, comprend les étapes suivantes consistant à :
(a)initialiser le guidage dit mixte 81 du véhicule à l'aide dudit marquage optique codé 16 et dudit dispositif 22, 24, 26, 40 de détection et de commande, dès la détection du marquage optique codé,
(b) arrêter le guidage immatériel 85 dès que l'un des galets 42 vient en contact 84 avec la bordure associée 18, 20,
(c) modifier l'angle de braquage du véhicule par l'intermédiaire d'au moins un bras 46 de manière que le véhicule suive le couloir défini par les bordures 18, 20,
(d) effectuer le guidage manuel 86 du véhicule par le conducteur du véhicule, et
(e)revenir à l'étape (a) à la demande du conducteur 81.

L'étape (c) comprend les étapes suivantes consistant à :
(c₁) détecter 84 le contact d'un des galets 42 sur la bordure 18, 20 associée,
(c₂) modifier 46 directement l'angle de braquage du véhicule.

Dans le cas où le système comprend, en outre, des capteurs de position latérale 52, l'étape (a) comprend, en outre, les étapes suivantes consistant à :
(a₁) calculer 95 la position du véhicule par rapport aux bordures à partir des distances mesurées par les capteurs 52 et,
(a₂) valider 96 les signaux de commande du véhicule en fonction de la position calculée du véhicule effectuée par l'étape (a₁).

Dans le cas où le système comprend des galets 42 en contact permanent avec les bordures, le procédé comprend les étapes suivantes consistant à :
(a)initialiser le guidage mixte 81 à l'aide du marquage optique codé 16 et dudit dispositif 22, 24, 26, 40 de détection et de commande dès la détection du marquage optique codé,
(b) passer en guidage mixte avec une détermination du guidage selon une loi prenant en compte l'effort en fonction de l'écrasement de l'ensemble galet-bras de suspension.

## Revendications

1. Système de guidage mixte pour véhicule urbain avec limitation mécanique de l'emprise au sol (10) sur une chaussée **caractérisée en ce qu'**il comprend :
- un marquage optique codé (16) qui est disposé sur la chaussée pour définir le trajet du véhicule (10) et ses différentes caractéristiques,
- un dispositif (22, 24, 26, 40) embarqué à bord du véhicule pour détecter le marquage optique codé et pour élaborer des signaux de commande du véhicule en vitesse et en direction de manière qu'il suive le trajet défini par le marquage optique codé et respecte les caractéristiques du trajet,
- deux bordures (18, 20) disposées de part et d'autre du marquage optique codé (16) de manière à définir, sur des parties déterminées du trajet, un couloir de passage pour le véhicule (10) dont la largeur correspond à l'écart latéral maximal autorisé du véhicule par rapport au marquage optique codé (16), et
- des galets (42) supportés par des bras (44) solidaires du véhicule et coopérant, d'une part, avec les bordures (18, 20) et, d'autre part, avec la direction (50) du véhicule pour modifier éventuellement l'angle de braquage du véhicule.

2. Système de guidage selon la revendication 1, **caractérisé en ce que** les bras (44) de support des galets (42)
- sont solidaires de la direction par l'intermédiaire d'amortisseurs,
- sont munis de capteurs (48) pour détecter le contact avec les bordures (18,20), et
- sont disposés de manière à venir en contact avec les bordures (18, 20) lorsque le véhicule s'écarte d'une certaine distance de sa trajectoire définie par le marquage codé optique et ainsi modifier (46) l'angle de braquage du véhicule, et
- assurent un retrait du galet arrière par rapport au galet avan de manière à pouvoir "décoller" la direction de la bordure lorsqu'elle est en appui, tout en garantissant la stabilité du guidage.

3. Système de guidage selon la revendication 2, **caractérisé en ce qu'**il comprend, en outre, au moins deux capteurs (52) de position latérale du véhicule par rapport aux bordures (18, 20) qui fournissent des valeurs de distance servant à calculer la position du véhicule entre les deux bordures et à valider les signaux de commande du véhicule en vitesse et en direction.

4. Système de guidage selon la revendication 1, **caractérisé en ce qu'**il comprend des galets (42) portés par des bras de suspension (44) en contact permanent avec les bordures (18,20).

5. Procédé de guidage d'un véhicule de transport en commun sur une chaussée pour mettre en oeuvre le système selon la revendication 2, **caractérisé en ce qu'**il comprend les étapes suivantes consistant à :
(a)initialiser le guidage dit mixte (81) du véhicule à l'aide dudit marquage optique codé (16) et dudit dispositif (22, 24, 26, 40) de détection et de commande, dès la détection du marquage optique codé,
(b) arrêter le guidage immatériel (85) dès que l'un des galets (42) vient en contact (84) avec la bordure associée (18, 20),
(c)modifier l'angle de braquage du véhicule par l'intermédiaire d'au moins un bras (46) de manière que le véhicule suive le couloir défini par les bordures (18, 20),
(d) effectuer le guidage manuel (86) du véhicule par le conducteur du véhicule, et
(e)revenir à l'étape (a) à la demande du conducteur (81).

6. , Procédé selon la revendication 5, **caractérisé en ce que** l'étape (c) comprend les, étapes suivantes consistant à :
(c₁) détecter (84) le contact d'un des galets (42) sur la bordure(18, 20) associée,
(c₂) modifier (46) directement l'angle de braquage du véhicule.

7. Procédé selon la revendication 5 ou 6 dans son application au système selon la revendication 3, **caractérisé en ce que** l'étape (a) comprend, en outre, les étapes suivantes consistant à :
(a₁) calculer (95) la position du véhicule par rapport aux bordures à partir des distances mesurées par les capteurs (52) et,
(a₂) valider (96) les signaux de commande du véhicule en fonction de la position calculée du véhicule effectuée par l'étape (a₁).

8. Procédé de guidage d'un véhicule de transport en commun sur une chaussée pour mettre en oeuvre un système selon la revendication 4, **caractérisé en ce qu'**il comprend les étapes suivantes consistant à :
(a)initialiser le guidage mixte (81) à l'aide du marquage optique codé (16) et dudit dispositif (22, 24, 26, 40) de détection et de commande dès la détection du marquage optique codé,
(b) passer en guidage mixte avec une détermination du guidage selon une loi prenant en compte l'effort en fonction de l'écrasement de l'ensemble galet-bras de suspension.

## Patentansprüche

1. System zur kombinierten Führung eines Stadtfahrzeugs mit mechanischer Begrenzung der Bodenbeanspruchung (10) auf einer Fahrbahn, **dadurch gekennzeichnet, dass** es folgende Elemente umfasst:
- eine kodierte, optische Markierung (16), die auf die Fahrbahn aufgebracht wird, um den Fahrweg des Fahrzeugs (10) und seine verschiedenen Merkmale zu definieren,
- eine Vorrichtung (22, 24, 26, 40), die an Bord des Fahrzeugs vorgesehen ist, um die kodierte optische Markierung zu erfassen und Signale zu erstellen, mit denen das Fahrzeug in seiner Geschwindigkeit und Richtung gesteuert wird, so dass es den durch die kodierte optische Markierung definierten Fahrweg befolgt und die Merkmale desselben beachtet,
- zwei Ränder (18, 20), die zu beiden Seiten der kodierten optischen Markierung (16) angebracht werden und auf bestimmten Abschnitten des Fahrwegs eine Spur (10) definieren, auf der das Fahrzeug fährt und deren Breite dem maximal zulässigen seitlichen Abstand des Fahrzeugs im Verhältnis zur kodierten optischen Markierung (16) entspricht, und
- Rollen (42), die durch fest mit dem Fahrzeug verbundene Arme (44) gestützt werden und einerseits mit den Rändern (18, 20) und andererseits mit der Lenkung (50) des Fahrzeugs zusammenarbeiten, um gegebenenfalls den Einschlagwinkel des Fahrzeugs zu ändern.

2. Führungssystem nach Anspruch 1, **dadurch gekennzeichnet, dass** die Arme (44), die die Rollen (42) stützen,
- über Dämpfer fest mit der Lenkung verbunden sind,
- Sensoren (48) aufweisen, mit denen der Kontakt mit den Rändern (18, 20) erfasst wird, und
- derart angeordnet sind, dass sie mit den Rändern (18, 20) in Kontakt gelangen, wenn sich das Fahrzeug von der durch die kodierte optische Markierung definierte Strecke um einen gewissen Abstand entfernt, wobei sie dadurch den Einschlagwinkel des Fahrzeugs ändern (46), und
- gewährleisten, dass die hintere Rolle im Verhältnis zur vorderen Rolle nach hinten versetzt ist, so dass die Lenkung vom Rand "gelöst" werden kann, wenn sie sich darauf abstützt, und dass die Arme gleichzeitig die Stabilität der Führung gewährleisten.

3. Führungssystem nach Anspruch 2, **dadurch gekennzeichnet, dass** es zudem wenigstens zwei Sensoren (52) umfasst, die die seitliche Position des Fahrzeugs im Verhältnis zu den Rändern (18, 20) erfassen und Abstandswerte liefern, die dazu dienen die Position des Fahrzeugs zwischen den beiden Rändern zu berechnen und die Signale zur Steuerung des Geschwindigkeit und der Lenkung des Fahrzeugs freizugeben.

4. Führungssystem nach Anspruch 1, **dadurch gekennzeichnet, dass** es Rollen (42) umfasst, die durch Aufhängungsarme (44) getragen werden, wobei diese Rollen ständig mit den Rändern (18, 20) in Kontakt stehen.

5. Verfahren zur Führung eines Fahrzeugs des öffentlichen Verkehrs auf einer Fahrbahn, das das System nach Anspruch 2 verwendet, **dadurch gekennzeichnet, dass** es die folgenden Schritte umfasst:
(a) mittels der kodierten, optischen Markierung (16) und der Vorrichtung (22, 24, 26, 40) zur Erfassung und Steuerung, die sogenannte kombinierte Führung (81) starten, sobald die kodierte, optische Markierung erfasst wurde,
(b) die nicht-gegenständliche Führung (85) anhalten, sobald eine der Rollen (42) in Kontakt (84) mit dem ihr zugeordneten Rand (18, 20) gelangt,
(c) über wenigstens einen Arm (46) den Einschlagwinkel des Fahrzeugs so ändern, dass das Fahrzeug in der durch die Ränder (18, 20) definierten Spur fährt,
(d) das Fahrzeug wird vom Fahrer des Fahrzeugs manuell gelenkt (86) und
(e) auf Wunsch des Fahrers (81) zu Schritt (a) zurückkehren.

6. Verfahren nach Anspruch 5, **dadurch gekennzeichnet, dass** der Schritt (c) die folgenden Teilschritte umfasst:
(c₁) den Kontakt einer der Rollen (42) mit dem ihr zugeordneten Rand (18, 20) erfassen (84),
(c₂) unmittelbar den Einschlagwinkel des Fahrzeugs ändern (46).

7. Verfahren nach Anspruch 5 oder 6 in seiner Anwendung auf das System nach Anspruch 3, **dadurch gekennzeichnet, dass** der Schritt (a) außerdem die folgenden Schritte umfasst:
(a₁) aufgrund der durch die Sensoren (52) gemessenen Abstände, die Position des Fahrzeugs im Verhältnis zu den Rändern berechnen (95) und
(a₂) die Steuerungssignale für das Fahrzeug je nach der in Schritt (a₁) berechneten Position des Fahrzeugs freigeben (96).

8. Verfahren zur Führung eines Fahrzeugs des öffentlichen Verkehrs auf einer Fahrbahn, das das System nach Anspruch 4 verwendet, **dadurch gekennzeichnet, dass** es die folgenden Schritte umfasst:
(a) mittels der kodierten, optischen Markierung (16) und der Vorrichtung (22, 24, 26, 40) zur Erfassung und Steuerung, die kombinierte Führung (81) starten, sobald die kodierte, optische Markierung erfasst wurde,
(b) zur kombinierten Führung übergehen, wobei die Führung durch ein Gesetz bestimmt wird, das die Belastung in Abhängigkeit vom Druck auf die Einheit Rolle-Aufhängungsarm in Betracht zieht.

## Claims

1. Mixed guidance system for town vehicle with mechanical limitation of the driving area (10) on a roadway **characterized in that** it includes:
- a coded optical marking (16) arranged on the roadway for defining the path of the vehicle (10) and its various characteristics,
- a device (22, 24, 26, 40) on board the vehicle for detecting the coded optical marking and for producing vehicle speed and steering control signals so that it follows the path defined by the coded optical marking and respects the characteristics of the path,
- two edges (18, 20) arranged on each side of the coded optical marking (16) so as to define, on specified parts of the path, a corridor for the passage of the vehicle (10) whose width corresponds to the permitted maximum lateral deviation of the vehicle with respect to the coded optical marking (16), and
- rollers (42) supported by arms (44) integral with the vehicle and cooperating both with the edges (18, 20) and with the vehicle's steering (50) for possibly changing the turning angle of the vehicle.

2. Guidance system according to Claim 1, **characterized in that** the roller (42) support arms (44)
- are integral with the steering via the intermediary of shock absorbers,
- are equipped with sensors (48) for detecting contact with the edges (18, 20), and
- are arranged so as to come into contact with the edges (18, 20) when the vehicle deviates a certain distance from its path defined by the coded optical marking and thus change (46) the turning angle of the vehicle, and
- ensure a withdrawal of the rear roller with respect to the front roller so as to be able to free the steering from the edge when it is supported against it, while guaranteeing the stability of the guidance.

3. Guidance system according to Claim 2, **characterized in that** it further includes at least two sensors (52) of the lateral position of the vehicle with respect to the edges (18, 20), which supply distance values used to calculate the position of the vehicle between the two edges and to validate the vehicle speed and steering control signals.

4. Guidance system according to Claim 1, **characterized in that** it includes rollers (42) borne by suspension arms (44) in continuous contact with the edges (18, 20).

5. Method of guidance of a public transport vehicle on a roadway for implementing the system according to Claim 2, **characterized in that** it includes the following steps consisting of:
(a) initializing the so-called mixed guidance (81) of the vehicle with the aid of the said coded optical marking (16) and of the said detection and control device (22, 24, 26, 40), as soon as the coded optical marking is detected,
(b) halting the non-physical guidance (85) as soon as one of the rollers (42) comes into contact (84) with the associated edge (18, 20),
(c) modifying the turning angle of the vehicle through the intermediary of at least one arm (46) so that the vehicle follows the corridor defined by the edges (18, 20),
(d) manual guidance (86) of the vehicle by the driver of the vehicle, and
(e) returning to step (a) at the request of the driver (81).

6. Method according to Claim 5, **characterized in that** step (c) includes the following steps consisting of:
(c₁) detecting (84) the contact of one of the rollers (42) on the associated edge (18, 20),
(c₂) directly changing (46) the turning angle of the vehicle.

7. Method according to Claim 5 or 6 in its application to the system according to Claim 3, **characterized in that** step (a) further includes the following steps consisting of:
(a₁) calculating (95) the position of the vehicle with respect to the edges based on the distances measured by the sensors (52) and,
(a₂) validating (96) the vehicle control signals according to the vehicle's calculated position produced by step (a₁).

8. Method of guidance of a public transport vehicle on a roadway for implementing the system according to Claim 4, **characterized in that** it includes the following steps consisting of:
(a) initializing so-called mixed guidance (81) with the aid of the said coded optical marking (16) and of the said detection and control device (22, 24, 26, 40), as soon as the coded optical marking is detected,
(b) changing to mixed guidance with guidance being determined according to a law taking into account the load as a function of the compression of the roller-suspension arm assembly.
